# EUROPÄISCHE PATENTSCHRIFT

(11) **EP 2 052 883 B1**
(45) Veröffentlichungstag und Bekanntmachung des Hinweises auf die Patenterteilung: **13.10.2010**
(21) Anmeldenummer: 08014043.7
(22) Anmeldetag: 06.08.2008
(51) Int. Cl.: B60G 7/00, B62D 7/14

(54) **Verstelleinheit für eine verstellbare Radaufhängung eines Kraftfahrzeugs**
Adjustment unit for an adjustable wheel suspension in a motor vehicle
Unité de réglage pour une suspension de roue réglable d'un véhicule automobile

(30) Priorität: 24.10.2007 DE 102007050794
(43) Veröffentlichungstag der Anmeldung: 29.04.2009
(73) Patentinhaber: Audi AG, 85045 Ingolstadt (DE)
(72) Erfinder: Michel, Wilfried, 93339 Riedenburg (DE); Müller, Hugo, 86701 Rohrenfels-Ballersdorf (DE)
(74) Vertreter: Asch, Konrad

(56) Entgegenhaltungen:
- EP-A- 1 384 915
- DE-A1- 3 523 912
- DE-A1- 3 925 241
- DE-A1- 4 421 096
- DE-A1-102005 042 821
- DE-C1- 3 733 295
- JP-A- 3 248 963
- JP-A- 5 221 218
- JP-A- 60 131 307
- JP-A- 62 001 608
- US-A- 4 709 935

## Beschreibung

Die Erfindung betrifft eine Verstelleinheit für eine verstellbare Radaufhängung eines Kraftfahrzeugs gemäß dem Oberbegriff des Patentanspruchs 1.

Hinsichtlich der Ausbildung einer Verstelleinheit für eine verstellbare Radaufhängung, beispielsweise in Form einer aktiven Hinterachslenkung für ein Kraftfahrzeug, gibt es verschiedene technische Lösungsansätze. Es sind sowohl elektromechanische als auch hydraulische Systeme im Einsatz. Aus dem Stand der Technik sind im Wesentlichen zwei Methoden bekannt, um ein Rad einer Radaufhängung verstellbar auszubilden, nämlich der Lenker ist in seiner Lenkerlänge veränderbar ausgebildet, oder der karosserieseitige Anbindungsbereich des Lenkers ist verschiebbar gelagert. Die weitere technische Lösung den radträgerseitigen Anbindungsbereich des Lenkers zu verschieben, ist weniger verbreitet und wird vorliegend nicht weiter betrachtet.

Die Variante, die Lenkerlänge zu verändern, erweist sich als nachteilig, da die hierfür notwendige Aktuatorik zwingend Bestandteil des eigentlichen Lenkers ist und damit äußerst schwer baut, mindestens zu 50 % zu den ungefederten Massen einer Radaufhängung zählt und zu allem Überfluss noch extrem "geschüttelt" wird (sehr hohe Beschleunigung auf die mechatronischen Bauteile). Hinzu kommen noch erhebliche Probleme, was den Freigang des Aktuators zu den benachbarten Bauteilen betrifft. Durch die relativ großvolumige Bauform, die der Lenker, respektive Aktuator hier naturgemäß annimmt, ist der Aktuator nur schwer oder gar nicht im zur Verfügung stehenden Bauraum unterzubringen.

Die Variante den karosserieseitigen Anbindungsbereich des Lenkers zu verschieben, erfordert in der Regel eine entsprechend aufwendig ausgebildete Lenker-Lagerung. Diese muss aufgrund der erforderlichen exakten Führung und Verstellung des Lenkers sorgfältig, d. h. "maschinenbaumäßig", gestaltet sein. Es kommen mindestens Gleitlager, wenn nicht sogar Wälzlager zum Einsatz. Die Lagerstelle wird somit zwangsläufig teuer.

Eine Verstelleinheit für eine verstellbare Radaufhängung eines Kraftfahrzeugs bei der der karosserieseitige Anbindungsbereich des Lenkers verstellbar ausgebildet ist, ist aus der DE 44 210 96 A1 bekannt. Hierbei ist eine Kolbenstange eines Hydraulikzylinders unter Einsatz einer Gummibuchse mit schwenkbar an dem karosserieseitigen Ende eines unteren Aufhängungsarmes befestigt. Die Kolbenstange wiederum ist innerhalb eines Zylinderkörpers derart gelagert, dass sie in Längsrichtung des jeweiligen Aufhängungsarmes verschiebbar ist. Der Zylinderkörper ist schließlich auf der Karosserieseite mit Hilfe einer Gummihalterung gelagert, wodurch die Dauerbelastbarkeit, die Umweltfestigkeit und die Montagefähigkeit der Zylinderanordnung verbessert wird. Als nachteilig erweist sich hierbei der Umstand, dass sämtliche Querkräfte, welche radseitig auf den Lenker wirken, auf die Kolbenstange und damit den Aktuator übergehen, was u.U. einen vorzeitigen Verschleiß des Aktuators bedingt.

Die DE 10 2005 042821 A1 zeigt eine Verstelleinheit nach dem Oberbegriff des Anspruchs 1.

Der Erfindung liegt die Aufgabe zugrunde, eine Verstelleinheit für eine verstellbare Radaufhängung eines Kraftfahrzeugs gemäß der im Oberbegriff des Anspruches 1 angegebenen Art unter Vermeidung der genannten Nachteile derart weiter zu bilden, dass eine Krafteinleitung in den Aktuator verhindert wird.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

Nach der Erfindung umfasst die Verstelleinheit für eine verstellbare Radaufhängung eines Kraftfahrzeugs mindestens einen Lenker mit einem radträgerseitigen und einem karosserieseitigen Anbindungsbereich, wobei der karosserieseitige Anbindungsbereich des Lenkers in Lenkerlängsrichtung betrachtet verschiebbar an einem karosseriefesten Hilfsrahmen gelagert ist. Erfindungsgemäß ist der karosserieseitige Anbindungsbereich des Lenkers über ein torsionsweich ausgebildetes Lager an einem mit einem Aktuator in Wirkverbindung stehendem und am Hilfsrahmen festgelegten Schublager gelagert. Das Schublager ist dabei in Lenkerlängsrichtung betrachtet weich, einen konstanten Federkennlinienverlauf und jeweils senkrecht zur Lenkerlängsrichtung steif, einen progressiven Federkennlinienverlauf aufweisend, ausgebildet.

Aufgrund der erfindungsgemäßen Ausbildung des Schublagers, nämlich in Verstellrichtung weich mit einem konstanten Federkennlinienverlauf bzw. senkrecht dazu, d. h. in Hoch- und Querrichtung, hart mit einem progressiven Federkennlinienverlauf, muss der Lenker bzw. der Lagerkern vom Aktuator nur entsprechend der Verstellrichtung gehalten und bei Bedarf geschoben werden. Alle Kräfte und Momente, welche eine Reaktion in den anderen Richtungen bewirken, werden in vorteilhafter Weise durch die Gestaltung des Schublagers abgestützt und kompensiert.

Ein weiterer Vorteil ist, dass das Schublager lediglich eine Verschiebung des Lenkers in einer im Wesentlichen horizontalen Ebene vorsieht. In vorteilhafter Weise ist dadurch sichergestellt, dass ein Verstellvorgang keine, bzw. nur eine unwesentliche Änderung der Momentanzentrumshöhe bedingt.

Vorzugsweise umfasst das Schublager ein am Hilfsrahmen festgelegtes Lagergehäuse, einen mit dem karosserieseitigen Anbindungsbereich des Lenkers und dem Aktuator in Wirkverbindung stehenden Lagerkern, sowie einen zwischen dem Lagergehäuse und Lagerkern angeordneten Elastomerkörper. Hierbei weist der Lagerkern parallel zur Lagerlängsrichtung ausgerichtete, eine V-förmige Querschnittsfläche aufweisende, erste und zweite Lagerkern-Randbereiche auf, die von jeweils korrespondierend dazu ausgebildeten ersten und zweiten Lagergehäuse-Bereichen teilweise umfasst sind. Der Elastomerkörper ist lediglich zwischen dem ersten Lagerkern-Randbereich und dem ersten Lagergehäuse-Bereich sowie dem zweiten Lagerkern-Randbereich und dem zweiten Lagergehäuse-Bereich angeordnet. In vorteilhafter Weise ist durch diese Ausbildung des Schublagers sichergestellt, dass in Lagerlängsrichtung aufgrund der Scherung des Elastomerkörpers eine verhältnismäßig geringe Verschiebekraft erforderlich ist, während in Hoch- und Querrichtung die dachförmige Gestaltung von Lagerkern-Randbereich und Lagergehäuse-Bereich die gewünschte Verhärtung bewirkt. Verstellwege in einer Größenordnung von ca. +/- 6 mm sind durch die Scherung des Elastomerkörpers ohne weiteres realisierbar. Damit erweist sich diese erfindungsgemäße Ausgestaltung insbesondere dann als vorteilhaft, wenn nur wenig Verstellweg erforderlich ist, wie beispielsweise für eine aktive fahrdynamische Regelung einer Hinterachslenkung. Zudem erweist sich diese Ausgestaltung als eine einfache, wirkungsvolle und kostengünstige Lösung.

In vorteilhafter Weise weist der Lagerkern des Schublagers ein sphärisches Lager zur Anbindung des Aktuators auf. Durch die sphärische Anbindung des Aktuators an den Lagerkern des Schublagers, ist eine weitere Entkopplung gewährleistet, sodass auf den Aktuator keinerlei störende Querkräfte einwirken können.

Gemäß einer ersten Ausführungsform der Erfindung ist der Lagerkern des Schublagers plattenförmig ausgebildet. In den plattenförmig ausgebildeten Lagerkern ist das eine Durchgangsbohrung aufweisende, vorzugsweise in Form eines Gummi-Metalllagers ausgebildete Lager, eingepresst. Der karosserieseitige Anbindungsbereich des Lenkers ist gabelförmig ausgebildet und weist zwei fluchtend zueinander angeordnete Durchgangsöffnungen auf. Der Lagerkern des Schublagers und der Lenker sind so zueinander angeordnet, dass der gabelförmig ausgebildete Anbindungsbereich des Lenkers den plattenförmigen Lagerkern teilweise umfasst und die Durchgangsöffnungen im gabelförmig ausgebildeten karosserieseitigen Anbindungsbereich sowie die Durchgangsbohrung im Lager des Lagerkerns fluchtend zueinander ausgerichtet sind. Über einen die Durchgangsöffnungen im gabelförmig ausgebildeten karosserieseitigen Anbindungsbereich des Lenkers und die Durchgangsbohrung im Lager des Lagerkerns des Schublagers durchfassenden Schraubbolzen sind der Lagerkern des Schublagers und der karosserieseitige Anbindungsbereich des Lenkers kraftschlüssig miteinander verbunden. Diese Ausführungsform der Erfindung erfordert lediglich die Ausbildung des Lenkers mit einem gabelförmigen Endbereich; das an sich bekannte, torsionsweich ausgebildete Gummi-Metalllager, welches bei dem Originallenker Verwendung findet, kann in vorteilhafter Weise bei dieser Ausgestaltung zum Einsatz kommen.

Gemäß einer zweiten Ausführungsform der Erfindung ist der Lagerkern des Schublagers hohlkörperförmig ausgebildet und weist in seinen Gehäusewänden zwei fluchtend zueinander angeordnete Durchgangsöffnungen auf. Der karosserieseitige Anbindungsbereich des Lenkers ist augenförmig ausgebildet. In den augenförmig ausgebildeten karosserieseitigen Anbindungsbereich ist das eine Durchgangsbohrung aufweisende, vorzugsweise wiederum in Form eines Gummi-Metalllagers ausgebildete Lager eingepresst. Der karosserieseitige Anbindungsbereich des Lenkers und der Lagerkern des Schublagers sind so zueinander angeordnet, dass das im augenförmig ausgebildeten karosserieseitigen Anbindungsbereich integrierte Lager des Lenkers innerhalb des hohlkörperförmig ausgebildeten Lagerkerns positioniert ist und die Durchgangsöffnungen im hohlkörperförmig ausgebildeten Lagerkern sowie die Durchgangsbohrung im Lager des Lenkers fluchtend zueinander ausgerichtet sind. Der Lagerkern des Schublagers und der karosserieseitige Anbindungsbereich des Lenkers sind wiederum mittels eines die Durchgangsöffnungen im hohlkörperförmig ausgebildeten Lagerkern und die Durchgangsbohrung im Lager des Lenkers durchfassenden Schraubbolzens kraftschlüssig miteinander verbunden. Diese Ausführungsform erweist sich als besonders vorteilhaft, da hier der Lenker unverändert übernommen werden kann. D. h. aufwendige Änderungen an der Lenkergeometrie sind nicht erforderlich; der Originallenker mit seinem in das Lenkerauge eingepresste Gummi-Metalllager kann weiterhin verwendet werden.

Vorzugsweise ist der Schraubbolzen mit Exzenterscheiben ausgebildet. Die Ausbildung des Schraubbolzens mit Exzenterscheiben erweist sich als besonders vorteilhaft, da neben der erfindungsgemäßen aktiven Verstellung mittels des Schublagers auch eine statische Vorspureinstellung über die Exzenterscheiben ermöglicht ist.

Gemäß einer weiteren vorteilhaften Ausführungsform ist der Aktuator mittels einer weiteren sphärischen Lagerung am Hilfsrahmen gelagert. Aufgrund der nunmehr beidseitigen sphärischen Lagerung des Aktuators ist in vorteilhafter Weise sichergestellt, dass ein Verklemmen verhindert wird, wenn sich der Lagerkern des Schublagers entsprechend seinen Freiheitsgraden bewegt.

Vorzugsweise ist der Lenker als ein in etwa in Lenkerlängsrichtung wirkender Linearsteller ausgebildet. In vorteilhafte Weise ist hierdurch eine extrem schnelle und präzise Lenkerverstellung ermöglicht.

Das Lagergehäuse des Schublagers ist kraft-, form- oder stoffschlüssig mit dem Hilfsrahmen verbunden.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen.

Die Erfindung wird im Folgenden an Hand der in den Zeichnungen dargestellte Ausführungsbeispielen näher beschrieben.

In der Beschreibung, den Ansprüchen und in der Zeichnung werden die in der unten angeführten Liste der Bezugszeichen verwendeten Begriffe und zugeordneten Bezugszeichen verwendet. In der Zeichnung bedeuten:
- Fig. 1: eine Hinterachse eines Kraftfahrzeugs in einer Ansicht schräg von unten mit einem Lenker nach dem Stand der Technik sowie einen für eine Um- rüstung auf eine aktive Hinterachslenkung vor- gesehenen erfindungsgemäßen, über ein Schubla- ger verstellbar ausgebildeten Lenker;
- Fig. 2: eine vergrößerte Darstellung des erfindungsge- mäßen, über das Schublager verstellbar ausge- bildeten Lenker aus Fig. 1;
- Fig. 3: eine Detailansicht des in Fig. 2 dargestellten Schublagers mit Schnittangaben;
- Fig. 4: Schublager aus Fig. 3 im Schnitt A-A;
- Fig. 5: Schublager aus Fig. 3 im Schnitt B-B;
- Fig. 6: Schublager aus Fig. 3 im Schnitt C-C;
- Fig. 7: Schublager aus Fig. 3 im Schnitt D-D;
- Fig. 8: eine schematische Darstellung einer weiteren Ausführungsform des Schublagers in der Drauf- sicht und im Längsschnitt und
- Fig. 9: eine schematische Schnittdarstellung einer wei- teren Ausführungsform des Schublagers.

In der nachfolgenden Beschreibung und in den Figuren werden zur Vermeidung von Wiederholungen gleiche Bauteile und Komponenten mit gleichen Bezugszeichen gekennzeichnet, sofern keine weitere Differenzierung erforderlich oder sinnvoll ist.

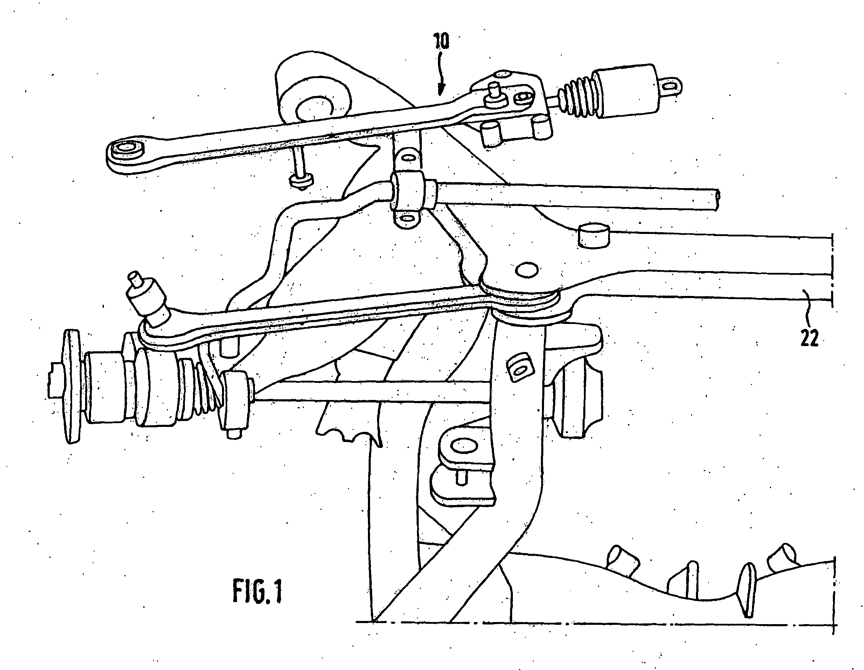

Fig. 1 zeigt in einer Ansicht schräg von unten eine Hinterachse eines Kraftfahrzeugs. Für eine Umstellung auf eine aktive Hinterachslenkung ist der aus dem Stand der Technik bekannte Lenker durch eine insgesamt mit der Bezugsziffer 10 bezeichnete Verstelleinheit zu ersetzen.

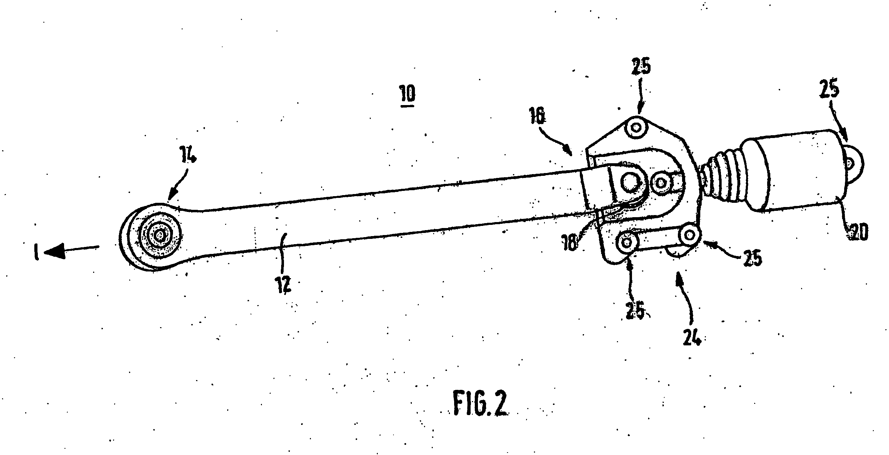

Wie insbesondere Fig. 2 zu entnehmen ist, umfasst die Verstelleinheit 10 einen Lenker 12 mit einem radträgerseitigen Anbindungsbereich 14 und einem karosserieseitigen Anbindungsbereich 16.

Der karosserieseitige Anbindungsbereich 16 des Lenkers 12 ist dabei über ein torsionsweich ausgebildetes Gummi-Metalllager 18 an einem mit einem Aktuator 20 in Wirkverbindung stehendem und an einem Hilfsrahmen 22 (vgl. Fig. 1) festgelegtem Schublager 24 gelagert. Der Aktuator 20 und das Schublager 24 sind jeweils mittels Schraubverbindungen 25 mit dem Hilfsrahmen 22 kraftschlüssig verbindbar. Die Lagerung des Aktuators 20 am Hilfsrahmen 22 ist dabei als eine sphärische Lagerung ausgebildet.

Erfindungsgemäß ist das Schublager 24 in Lenkerlängsrichtung 1 betrachtet weich, mit einem konstanten Federkennlinienverlauf und jeweils senkrecht zur Lenkerlängsrichtung 1, d. h. in Hoch- und Querrichtung, steif mit einem progressiven Federkennlinienverlauf ausgebildet. D. h. der Lenker 12 bzw. der karosserieseitige Anbindungsbereich 16 des Lenkers 12 kann vom Aktuator 20 in Verstellrichtung, d.h. in Lenkerlängsrichtung 1, verschoben werden. Alle Kräfte und Momente, welche eine Reaktion in Hoch- oder Querrichtung bewirken, werden von dem Schublager 24 abgestützt und kompensiert.

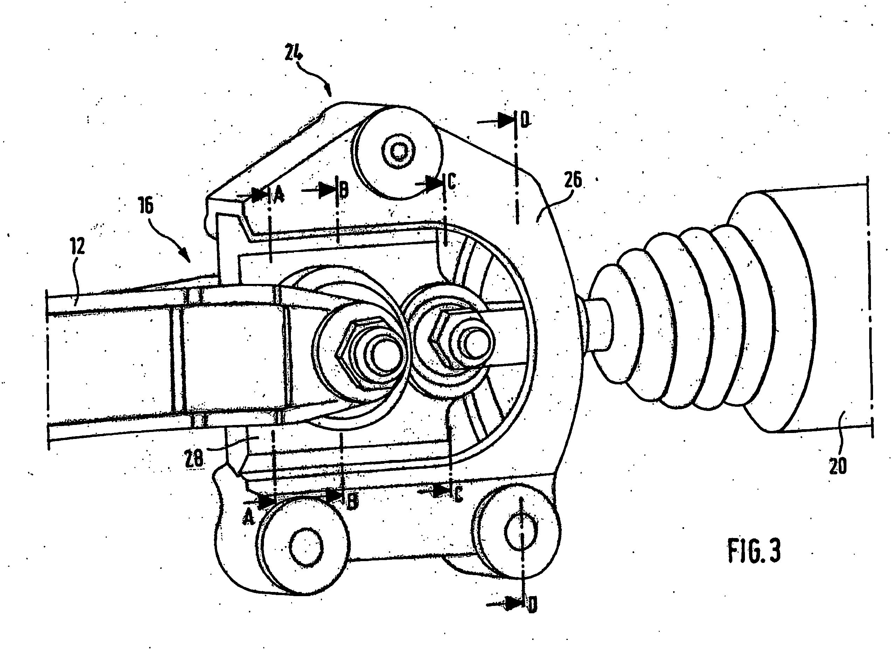

Die detaillierte Ausgestaltung des Schublagers 24 ist in Fig. 3 bis Fig. 9 dargestellt:

Wie insbesondere Fig. 3 zu entnehmen ist, weist das Schublager 24 ein am Hilfsrahmen 22 festlegbares Lagergehäuse 26 und einen Lagerkern 28 auf. Der Lagerkern 28 des Schublagers 24 steht mit dem karosserieseitigen Anbindungsbereich 16 des Lenkers 12 und dem Aktuator 20 in Wirkverbindung.

Bei dieser ersten Ausführungsform ist der karosserieseitige Anbindungsbereich 16 des Lenkers 12 gabelförmig ausgebildet und umfasst bzw. umschließt den im Wesentlichen plattenförmig ausgebildeten Lagerkern 28 des Schublagers 24.

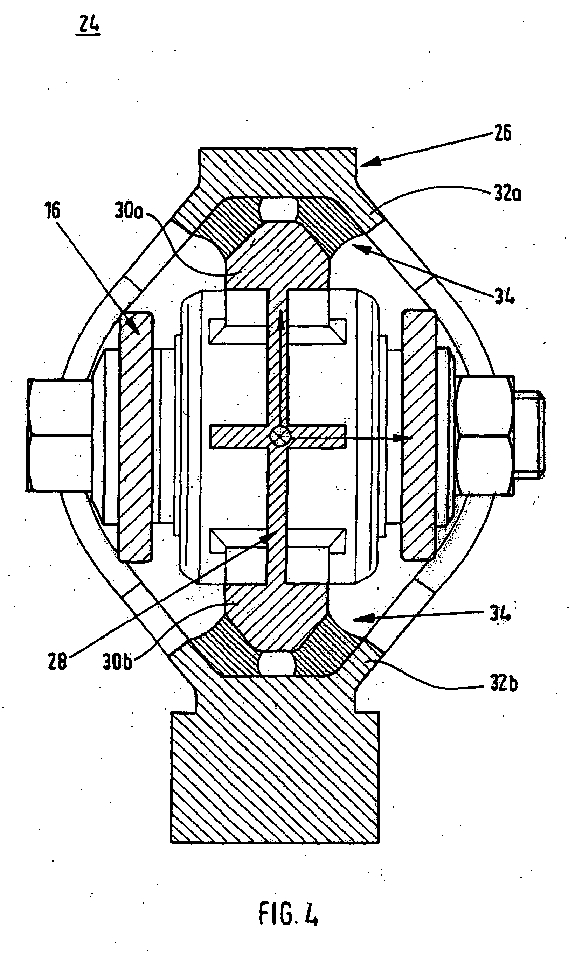

Wie insbesondere Fig. 4 zeigt, weist der Lagerkern 28 des Schublagers 24 in Lagerlängsrichtung 1 ausgerichtete, eine V-förmige Querschnittsfläche aufweisende, erste und zweite Lagerkern-Randbereiche 30a, 30b auf. Die Lagerkern-Randbereiche 30a, 30b sind von jeweils korrespondierend dazu ausgebildeten Lagergehäuse-Bereiche 32a, 32b umfasst. Zwischen dem ersten Lagerkern-Randbereich 30a und dem ersten Lagergehäuse-Bereich 32a sowie dem zweiten Lagerkern-Randbereich 30b und dem zweiten Lagergehäuse-Bereich 32b ist jeweils ein Elastomerkörper 34 angeordnet. Durch diese dachförmige Gestaltung von Lagerkern 28 und Gehäuse 26 des Schublagers 24 ergibt sich in Hoch- und Querrichtung die gewünschte harte, progressive Lagerkennlinie, während in Lagerlängsrichtung 1 aufgrund der Scherung der Elastomerkörper 34 eine weiche Kennung vorliegt.

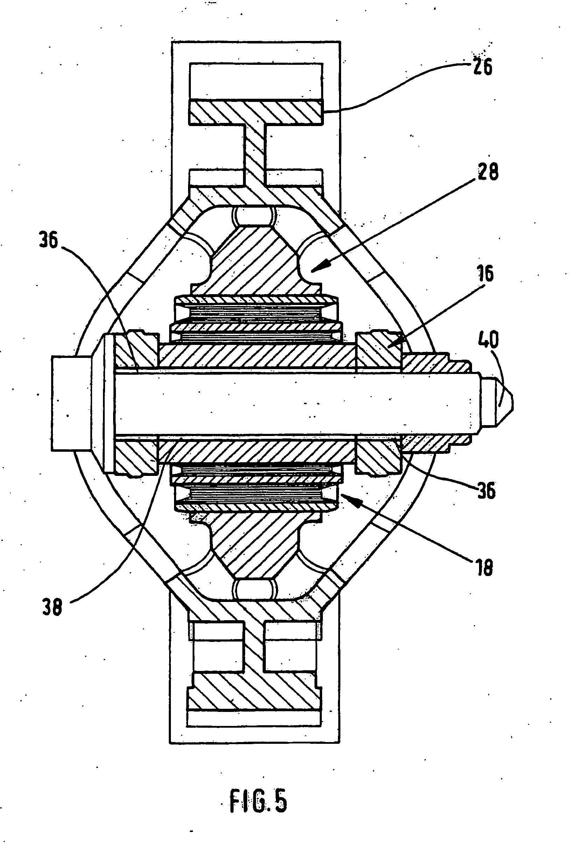

Wie insbesondere Fig. 5 zu entnehmen ist, ist zur Festlegung des Lenkers 12 an den Lagerkern 28 des Schublagers 24 der gabelförmig ausgebildete Anbindungsbereich 16 des Lenkers 12 mit zwei fluchtend zueinander angeordneten Durchgangsöffnungen 36 versehen. Das eine Durchgangsbohrung 38 aufweisende Gummi-Metalllager 18 ist in den plattenförmig ausgebildeten Lagerkern 28 des Schublagers 24 eingepresst. Über einen die Durchgangsöffnungen 36 im gabelförmigen Anbindungsbereich 16 des Lenkers 12 und die Durchgangsbohrung 38 im Gummi-Metalllager 18 des Lagerkerns 28 des Schublagers 24 durchfassenden Schraubbolzen 40 sind der Lagerkern 28 des Schublagers 24 und der karosserieseitige Anbindungsbereich 16 des Lenkers 12 kraftschlüssig miteinander verbunden.

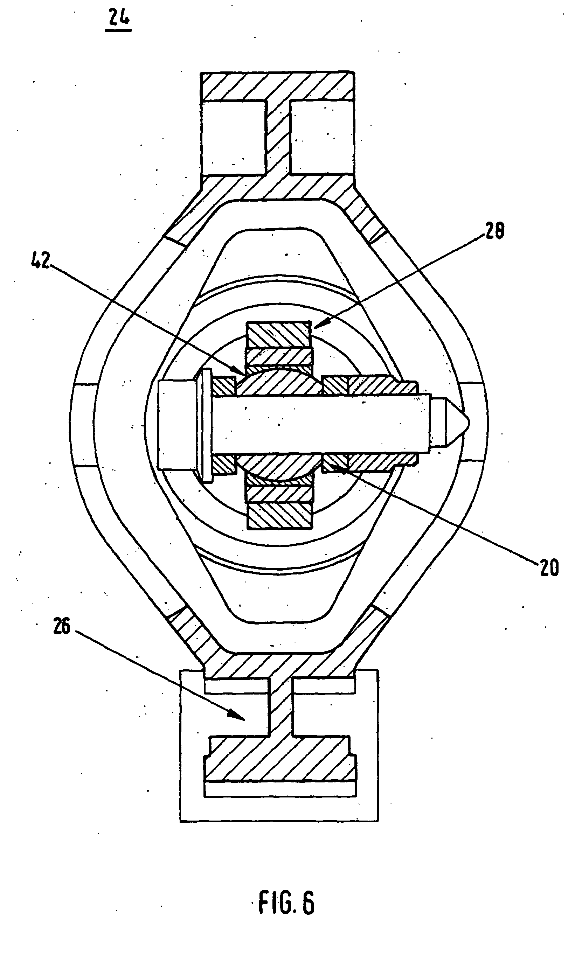

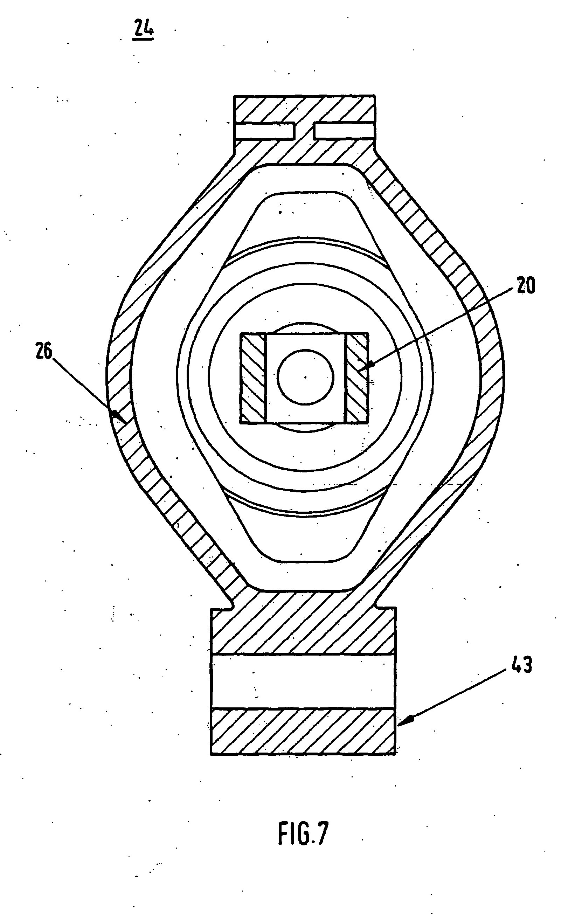

Wie weiterhin Fig. 6 und 7 zu entnehmen ist, ist der dem Lagerkern 28 zugewandte Bereich des Aktuator 20 ebenfalls gabelförmig ausgebildet und mittels einer sphärischen Lagerung 42 am Lagerkern 28 des Schublagers 24 festgelegt. Zudem sind am Lagergehäuse 26 des Schublagers 24 Butzen 43 für die kraftschlüssige Verbindung mit dem Hilfsrahmen 22 ausgebildet.

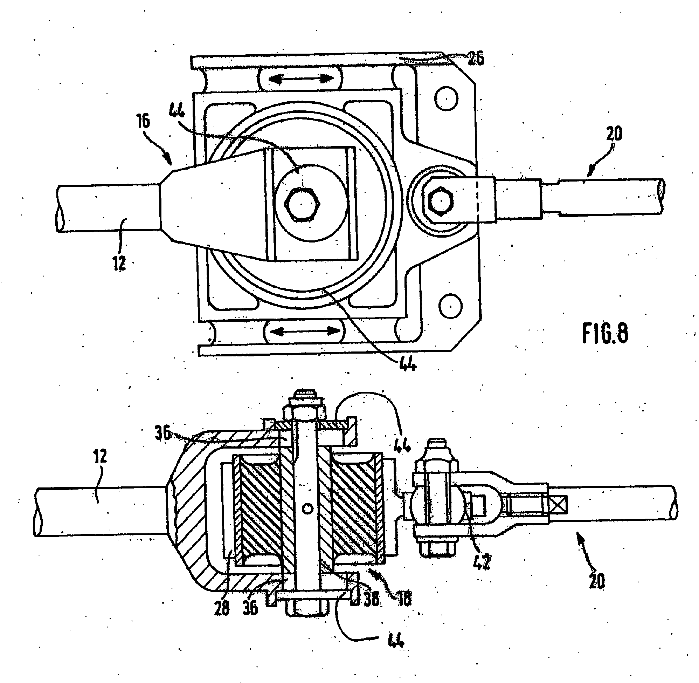

Bei der in Fig. 8 dargestellten Ausführungsform ist der Schraubbolzen 40 mit einem Exzenter 44 verbunden. Hierdurch ist neben der aktiven Verstellung des Lenkers 12 über das Schublager 24 auch eine statische Vorspureinstellung mittels des Exzenters 44 ermöglicht.

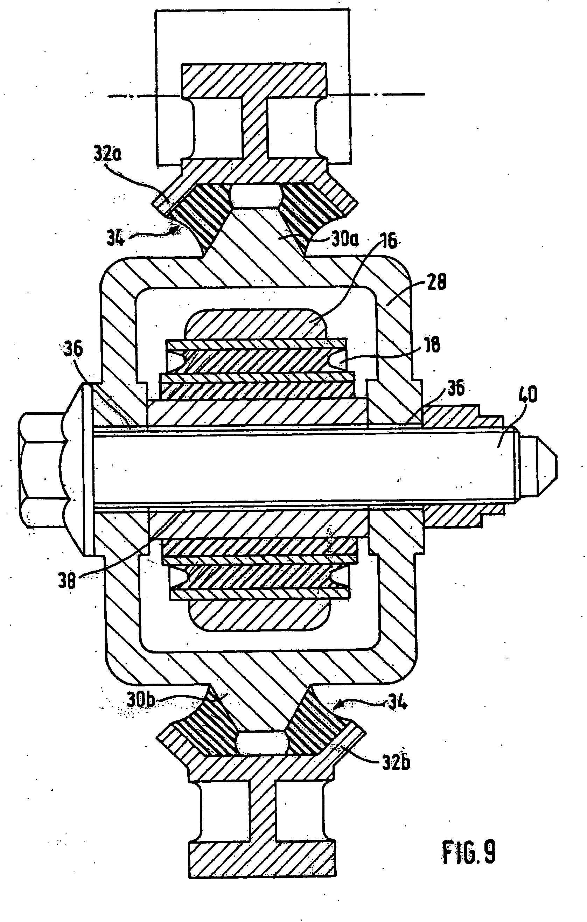

Eine weitere Ausführungsform ist in Fig. 9 dargestellt. Im Gegensatz zu der bereits beschriebenen Ausführungsform ist hier der Lagerkern 28 des Schublagers 24 hohlkörperförmig ausgebildet und die fluchtend zueinander angeordneten Durchgangsöffnungen 36 sind in die entsprechende Gehäusewand des hohlkörperförmigen Lagerkern 28 des Schublagers 24 eingebracht.

Der karosserieseitige Anbindungsbereich 16 des Lenkers 12 ist augenförmig ausgebildet. In den augenförmig ausgebildeten karosserieseitigen Anbindungsbereich 16 ist das eine Durchgangsbohrung 38 aufweisende Gummi-Metalllager 18 eingepresst. Der karosserieseitige Anbindungsbereich 16 des Lenkers 12 und der Lagerkern 28 des Schublagers 24 sind wiederum so zueinander angeordnet, dass die Durchgangsöffnungen 36 im hohlkörperförmig ausgebildeten Lagerkern 28 sowie die Durchgangsbohrung 38 im Gummi-Metalllager 18 des Lenkers 12 fluchtend zueinander ausgerichtet sind.

Der Lagerkern 28 des Schublagers 24 und der karosserieseitige Anbindungsbereich 16 des Lenkers 12 sind wiederum mittels eines die Durchgangsöffnungen 36 und die Durchgangsbohrung 38 durchfassenden Schraubbolzens 40 kraftschlüssig miteinander verbunden.

Diese Ausführungsform erweist sich als besonders vorteilhaft, da hier der Lenker 12 unverändert übernommen werden kann. D. h. aufwendige Änderungen an der Lenkergeometrie sind nicht erforderlich, und der Originallenker mit seinem in das Lenkerauge eingepresste Gummi-Metalllager kann Verwendung finden.

### BEZUGSZEICHENLISTE

- 10: Verstelleinheit
- 12: Lenker
- 14: Radträgerseitiger Anbindungsbereich
- 16: Karosserieseitiger Anbindungsbereich
- 18: Gummi-Metalllager
- 20: Aktuator
- 22: Hilfsrahmen
- 24: Schublager
- 25: Schraubverbindung
- 26: Lagergehäuse
- 28: Lagerkern
- 30a: Erster Lagerkern-Randbereich
- 30b: Zweiter Lagerkern-Randbereich
- 32a: Erster Lagergehäuse-Bereich
- 32b: Zweiter Lagergehäuse-Bereich
- 34: Elastomerkörper
- 36: Durchgangsöffnungen
- 38: Durchgangsbohrung
- 40: Schraubbolzen
- 42: sphärische Lagerung
- 43: Butzen
- 44: Exzenter
- 1: Lenkerlängsrichtung

## Patentansprüche

1. Verstelleinheit (10) für eine verstellbare Radaufhängung eines Kraftfahrzeugs, umfassend mindestens einen Lenker (12) mit einem radträgerseitigen und einem karosserieseitigen Anbindungsbereich (14, 16), wobei der karosserieseitige Anbindungsbereich (16) des Lenkers (12) in Lenkerlängsrichtung (1) betrachtet verschiebbar an einem karosseriefesten Hilfsrahmen (22) gelagert ist, und wobei der karosserieseitige Anbindungsbereich (16) des Lenkers (12) über ein torsionsweich ausgebildetes Lager (18) an einem mit einem Aktuator (20) in Wirkverbindung stehendem und am Hilfsrahmen (22) festgelegten Schublager (24) gelagert ist, **dadurch gekennzeichnet, dass** das Schublager (24) in Lenkerlängsrichtung (1) betrachtet weich, einen konstanten Federkennlinienverlauf und jeweils senkrecht zur Lenkerlängsrichtung (1) steif, einen progressiven Federkennlinienverlauf aufweisend ausgebildet ist.

2. Verstelleinheit nach Anspruch 1, **dadurch gekennzeichnet, dass** das Schublager (24) ein am Hilfsrahmen (22) festgelegtes Lagergehäuse (26), einen mit dem karosserieseitigen Anbindungsbereich (16)
des Lenkers (12) und dem Aktuator (20) in Wirkverbindung stehen Lagerkern (28), sowie einen zwischen Lagergehäuse (26) und Lagerkern (28) angeordneten Elastomerkörper (34) umfasst, wobei der Lagerkern (28) parallel zur Lagerlängsrichtung (1) ausgerichtete, eine V-förmige Querschnittsfläche aufweisende erste und zweite Lagerkern-Randbereiche (30a, 30b)aufweist, die von jeweils korrespondierend dazu ausgebildeten ersten und zweiten Lagergehäuse-Bereichen (32a, 32b) teilweise umfasst sind, und dass der Elastomerkörper (34) lediglich zwischen dem ersten Lagerkern-Randbereich (30a) und dem ersten Lagergehäuse-Bereich (32a) sowie dem zweiten Lagerkern-Randbereich (30b) und dem zweiten Lagergehäuse-Bereich (32b) angeordnet ist.

3. Verstelleinheit nach Anspruch 2, **dadurch gekennzeichnet, dass** der Lagerkern (28) des Schublagers (24) ein sphärisches Lager (42) zur Anbindung des Aktuators (20) aufweist.

4. Verstelleinheit nach den Ansprüchen 2 und 3, **dadurch gekennzeichnet, dass** der Lagerkern (28) des Schublagers (24) plattenförmig, das eine Durchgangsbohrung (38) aufweisende Lager (18) integrierend ausgebildet ist, und dass der karosserieseitige Anbindungsbereich (16) des Lenkers (12) gabelförmig, Durchgangsöffnungen (36) aufweisend und den plattenförmigen Lagerkern (28) teilweise umschließend, ausgebildet ist, wobei der Lagerkern (28) des Schublagers (24) und der karosserieseitige Anbindungsbereich (16) des Lenkers (12) mittels eines die Durchgangsöffnungen (36) im gabelförmig ausgebildeten karosserieseitigen Anbindungsbereich (16) des Lenkers (12) und die Durchgangsbohrung (38) im Lager (18) des Lagerkerns (28) des Schublagers (24) durchfassenden Schraubbolzens (40) kraftschlüssig miteinander verbunden sind.

5. Verstelleinheit nach Anspruch 4, **dadurch gekennzeichnet, dass** das Lager (18) in den plattenförmig ausgebildeten Lagerkern (28) des Schublagers (24) eingepresst ist.

6. Verstelleinheit nach den Ansprüchen 2 und 3, **dadurch gekennzeichnet, dass** der Lagerkern (28) des Schublagers (24) hohlkörperförmig, Durchgangsöffnungen (36) aufweisend ausgebildet ist, und dass der karosserieseitige Anbindungsbereich (16) des Lenkers (12) augenförmig, das eine Durchgangsbohrung (38) aufweisend Lager (18) integrierend ausgebildet ist, wobei das im augenförmig ausgebildeten karosserieseitigen Anbindungsbereich (16) des Lenkers (12) integrierte Lager (18) innerhalb des hohlkörperförmig ausgebildeten Lagerkerns (28) des Schublagers (24) positioniert ist und der Lagerkern (28) des Schublagers (24) und der karosserieseitige Anbindungsbereich (16) des Lenkers (12) mittels eines die Durchgangsöffnungen (36) im hohlkörperförmig ausgebildeten Lagerkern (28) des Schublagers (24) und die Durchgangsbohrung (38) im Lager (18) des Lenkers (12) durchfassenden Schraubbolzens (40) kraftschlüssig miteinander verbunden sind.

7. Verstelleinheit nach Anspruch 6, **dadurch gekennzeichnet, dass** das Lager (18) in den augenförmig ausgebildeten karosserieseitigen Anbindungsbereich (16) des Lenkers (12) eingepresst ist.

8. Verstelleinheit nach den Ansprüchen 4 oder 6, **dadurch gekennzeichnet, dass** der Schraubbolzen (40) mit Exzenterscheiben (44) ausgebildet ist.

9. Verstelleinheit nach einem der vorhergehenden Ansprüche, **dadurch gekennzeichnet, dass** das Lager (18) als ein Gummi-Metalllager ausgebildet ist.

10. Verstelleinheit nach einem der vorhergehenden Ansprüche, **dadurch gekennzeichnet, dass** der Aktuator (20) mittels einer sphärischen Lagerung (42) am Hilfsrahmen (22) gelagert ist.

11. Verstelleinheit nach einem der vorhergehenden Ansprüche, **dadurch gekennzeichnet, dass** der Aktuator (20) als ein in etwa in Längsrichtung (1) des Lenkers (12) wirkender Linearsteller ausgebildet ist.

12. Verstelleinheit nach einem der vorhergehenden Ansprüche, **dadurch gekennzeichnet, dass** das Lagergehäuse (26) des Schublagers (24) kraft- oder form- oder stoffschlüssig mit dem Hilfsrahmen (22) verbunden ist.

## Claims

1. Adjusting unit (10) for an adjustable wheel suspension of a motor vehicle, comprising at least one link (12) with a wheel-carrier-side and a body-side connecting region (14, 16), with the body-side connecting region (16) of the link (12) being mounted, so as to be movable as viewed in the link longitudinal direction (1), on a subframe (22) which is fixed with respect to the body, and with the body-side connecting region (16) of the link (12) being mounted via a torsionally flexible bearing (18) on a thrust bearing (24) which is operatively connected to an actuator (20) and which is fixed to the subframe (22), **characterized in that** the thrust bearing (24) is formed so as to be flexible and to have a constant spring characteristic profile as viewed in the link longitudinal direction (1), and so as to be rigid and to have a progressive spring characteristic profile in each case perpendicular to the link longitudinal direction (1).

2. Adjusting unit according to Claim 1, **characterized in that** the thrust bearing (24) comprises a bearing housing (26) fixed to the subframe (22), a bearing core (28) operatively connected to the body-side connecting region (16) of the link (12) and to the actuator (20), and also an elastomer body (34) arranged between the bearing housing (26) and bearing core (28), with the bearing core (28) having first and second bearing core edge regions (30a, 30b) which are aligned parallel to the bearing longitudinal direction (1) and which have a V-shaped cross-sectional area and which are partially surrounded by first and second bearing housing regions (32a, 32b) which are in each case designed correspondingly to said bearing core edge regions (30a, 30b), and **in that** the elastomer body (34) is arranged only between the first bearing core edge region (30a) and the first bearing housing region (32a) and also between the second bearing core edge region (30b) and the second bearing housing region (32b).

3. Adjusting unit according to Claim 2, **characterized in that** the bearing core (28) of the thrust bearing (24) has a spherical bearing (42) for the connection of the actuator (20).

4. Adjusting unit according to Claims 2 and 3, **characterized in that** the bearing core (28) of the thrust bearing (24) is of plate-shaped design integrating the bearing (18) which has a through bore (38), and **in that** the body-side connecting region (16) of the link (12) is of fork-shaped design having through openings (36) and partially surrounding the plate-shaped bearing core (28), with the bearing core (28) of the thrust bearing (24) and the body-side connecting region (16) of the link (12) being connected to one another in a non-positively locking fashion by means of a threaded bolt (40) which extends through the through openings (36) in the fork-shaped body-side connecting region (16) of the link (12) and through the through bore (38) in the bearing (18) of the bearing core (28) of the thrust bearing (24).

5. Adjusting unit according to Claim 4, **characterized in that** the bearing (18) is pressed into the plate-shaped bearing core (28) of the thrust bearing (24).

6. Adjusting unit according to Claims 2 and 3, **characterized in that** the bearing core (28) of the thrust bearing (24) is of hollow-body-shaped design having through openings (36), and **in that** the body-side connecting region (16) of the link (12) is of lug-shaped design integrating the bearing (18) which has a through bore (38), with the bearing (18) which is integrated in the lug-shaped body-side connecting region (16) of the link (12) being positioned within the hollow-body-shaped bearing core (28) of the thrust bearing (24), and with the bearing core (28) of the thrust bearing (24) and the body-side connecting region (16) of the link (12) being connected to one another in a non-positively locking fashion by means of a threaded bolt (40) which extends through the through openings (36) in the hollow-body-shaped bearing core (28) of the thrust bearing (24) and through the through bore (38) in the bearing (18) of the link (12).

7. Adjusting unit according to Claim 6, **characterized in that** the bearing (18) is pressed into the lug-shaped body-side connecting region (16) of the link (12).

8. Adjusting unit according to Claims 4 or 6, **characterized in that** the threaded bolt (40) is formed with eccentric disks (44).

9. Adjusting unit according to one of the preceding claims, **characterized in that** the bearing (18) is designed as a rubber-metal bearing.

10. Adjusting unit according to one of the preceding claims, **characterized in that** the actuator (20) is mounted on the subframe (22) by means of a spherical bearing arrangement (42).

11. Adjusting unit according to one of the preceding claims, **characterized in that** the actuator (20) is designed as a linear actuator which acts approximately in the longitudinal direction (1) of the link (12).

12. Adjusting unit according to one of the preceding claims, **characterized in that** the bearing housing (26) of the thrust bearing (24) is connected to the subframe (22) in a non-positively locking or positively locking or materially joined fashion.

## Revendications

1. Unité de réglage (10) pour une suspension de roue réglable d'un véhicule automobile, comprenant au moins un bras (12) avec une partie de liaison côté support de roue et côté carrosserie (14, 16), la partie de liaison côté carrosserie (16) du bras (12), vue dans la direction longitudinale du bras (1), étant montée de manière déplaçable sur un cadre auxiliaire (22) fixé à la carrosserie, et la partie de liaison côté carrosserie (16) du bras (12) étant montée par le biais d'un palier (18) réalisé de manière flexible en torsion sur un palier de poussée (24) en liaison fonctionnelle avec un actionneur (20) et fixé sur le cadre auxiliaire (22), **caractérisée en ce que** le palier de poussée (24), vu dans la direction longitudinale du bras (1), est réalisé sous forme flexible en présentant une courbe caractéristique de ressort constante, et vu dans la direction perpendiculairement à la direction longitudinale du bras (1), est réalisé sous forme rigide en présentant une courbe caractéristique de ressort progressive.

2. Unité de réglage selon la revendication 1, **caractérisée en ce que** le palier de poussée (24) comprend un boîtier de palier (26) fixé au cadre auxiliaire (22), un noyau de palier (28) en liaison fonctionnelle avec la zone de liaison du côté de la carrosserie (16) du bras (12) et avec l'actionneur (20), ainsi qu'un corps en élastomère (34) disposé entre le boîtier de palier (26) et le noyau de palier (28), le noyau de palier (28) présentant des première et deuxième zones de bord de noyau de palier (30a, 30b) présentant une forme en V en section transversale et orientées parallèlement à la direction longitudinale du palier (1), qui sont partiellement entourées par des première et deuxième zones de boîtier de palier respectives (32a, 32b) réalisées de manière correspondante, et **en ce que** le corps en élastomère (34) est disposé seulement entre la première zone de bord du noyau de palier (30a) et la première zone de boîtier de palier (32a), ainsi qu'entre la deuxième zone de bord de noyau de palier (30b) et la deuxième zone de boîtier de palier (32b).

3. Unité de réglage selon la revendication 2, **caractérisée en ce que** le noyau de palier (28) du palier de poussée (24) présente un palier sphérique (42) pour la connexion de l'actionneur (20).

4. Unité de réglage selon les revendications 2 et 3, **caractérisée en ce que** le noyau de palier (28) du palier de poussée (24) est réalisé en forme de plaque, en intégrant le palier (18) présentant un alésage traversant (38), et **en ce que** la zone de liaison du côté de la carrosserie (16) du bras (12) est réalisée en forme de fourche, présentant des ouvertures de passage (36) et entourant partiellement le noyau de palier en forme de plaque (28), le noyau de palier (28) du palier de poussée (24) et la zone de liaison du côté de la carrosserie (16) du bras (12) étant connectés par engagement par force l'un à l'autre au moyen d'un boulon fileté (40) traversant les ouvertures de passage (36) dans la zone de liaison du côté de la carrosserie (16) réalisée en forme de fourche du bras (12) et l'alésage traversant (38) dans le palier (18) du noyau de palier (28) du palier de poussée (24).

5. Unité de réglage selon la revendication 4, **caractérisée en ce que** le palier (18) est pressé dans le noyau de palier (28) du palier de poussée (24) réalisé en forme de plaque.

6. Unité de réglage selon les revendications 2 et 3, **caractérisée en ce que** le noyau de palier (28) du palier de poussée (24) est réalisé en forme de corps creux, présentant des ouvertures de passage (36), et **en ce que** la zone de liaison du côté de la carrosserie (16) du bras (12) est réalisée en forme d'oeillet, et intègre un palier (18) présentant un alésage traversant (38), le palier (18) intégré dans la zone de liaison du côté de la carrosserie (16) réalisée en forme d'oeillet du bras (12) étant positionné à l'intérieur du noyau de palier (28) du palier de poussée (24) réalisé sous forme de corps creux, et le noyau de palier (28) du palier de poussée (24) et la région de liaison du côté de la carrosserie (16) du bras (12) étant connectés l'un à l'autre par engagement par force au moyen d'un boulon fileté (40) traversant les ouvertures de passage (36) dans le noyau de palier (28) réalisé sous forme de corps creux du palier de poussée (24) et l'alésage traversant (38) dans le palier (18) du bras (12).

7. Unité de réglage selon la revendication 6, **caractérisée en ce que** le palier (18) est pressé dans la zone de liaison du côté de la carrosserie (16) réalisée sous forme d'oeillet du bras (12).

8. Unité de réglage selon les revendications 4 ou 6, **caractérisée en ce que** le boulon fileté (40) est réalisé avec des disques d'excentrique (44).

9. Unité de réglage selon l'une quelconque des revendications précédentes, **caractérisée en ce que** le palier (18) est réalisé sous forme de palier en caoutchouc-métal.

10. Unité de réglage selon l'une quelconque des revendications précédentes, **caractérisée en ce que** l'actionneur (20) est monté sur le cadre auxiliaire (22) au moyen d'un support de palier sphérique (42).

11. Unité de réglage selon l'une quelconque des revendications précédentes, **caractérisée en ce que** l'actionneur (20) est réalisé sous forme d'actionneur linéaire agissant approximativement dans la direction longitudinale (1) du bras (12).

12. Unité de réglage selon l'une quelconque des revendications précédentes, **caractérisée en ce que** le boîtier de palier (26) du palier de poussée (24) est connecté par engagement par force ou par correspondance géométrique ou par liaison de matière au cadre auxiliaire (22).
